# EUROPÄISCHE PATENTSCHRIFT

(11) **EP 3 388 901 B1**
(45) Veröffentlichungstag und Bekanntmachung des Hinweises auf die Patenterteilung: **23.08.2023**
(21) Anmeldenummer: 17165751.3
(22) Anmeldetag: 10.04.2017
(51) Int. Cl.: G05B 9/02, G05B 19/418

(54) **SICHERHEITSGERICHTETES AUTOMATISIERUNGSSYSTEM**
SAFETY-ORIENTED AUTOMATION SYSTEM
SYSTÈME D'AUTOMATISATION SÉCURISÉE

(43) Veröffentlichungstag der Anmeldung: 17.10.2018
(73) Patentinhaber: Siemens Aktiengesellschaft, 80333 München (DE)
(72) Erfinder: Barthel, Herbert, 91074 Herzogenaurach (DE); Walter, Maximilian, 90408 Nürnberg (DE)
(74) Vertreter: Siemens Patent Attorneys

(56) Entgegenhaltungen:
- WO-A1-98/17033
- DE-A1-102013 003 166
- US-A1- 2009 105 849
- US-B1- 6 704 819
- Olga Weis: "Serial over network - share COM port software and hardware guide", , 1. Oktober 2015 (2015-10-01), Seiten 1-7, XP055413173, Gefunden im Internet: URL:https://www.flexihub.com/serial-over-n etwork.html [gefunden am 2017-10-06]
- NEAMATOLLAHI PEYMAN ET AL: "A simple token-based algorithm for the mutual exclusion problem in distributed systems", JOURNAL OF SUPERCOMPUTING, KLUWER ACADEMIC PUBLISHERS, DORDRECHT, NL, Bd. 73, Nr. 9, 22. Februar 2017 (2017-02-22), Seiten 3861-3878, XP036297788, ISSN: 0920-8542, DOI: 10.1007/S11227-017-1985-Y [gefunden am 2017-02-22]

## Beschreibung

5 Die Erfindung betrifft ein Automatisierungssystem umfassend einen Feldbus, zumindest zwei Wechselgeräte mit einem austauschbaren Werkzeug, zumindest zwei Automatisierungsgeräte, welche an den Feldbus fest angeschlossen sind, zumindest zwei Ankopplungsstellen, welche an den Feldbus angeschlossen sind, und für ein automatisiertes An- und Abkoppeln eines Wechselgerätes an den Feldbus ausgestaltet sind, wobei jedes Wechselgerät einen Feldbusteilnehmer umfasst, der für eine Ansteuerung von Aktoren auf dem Werkzeug ausgebildet ist,die Wechselgeräte ein austauschbares Werkzeug und einen Feldbusteilnehmer umfassen und weiterhin ausgestaltet sind mit den Automatisierungsgeräten eine funktional sichere Verbindung über den Feldbus aufzubauen, wobei die dadurch erreichte funktionale Sicherheit zur Vermeidung von Fehlfunktionen durch Fehler dient.

Im Sinne der Erfindung bedeutet funktionale Sicherheit, die Sicherheit für einen Teil des Systems, der von einer korrekten Funktion der sicherheitsbezogenen Systeme und externen Einrichtungen zur Risikominderung abhängt. Funktionale Sicherheit ist dann gegeben, wenn jedes Risiko über Sicherheitsfunktionen so abgesichert wird, dass die Maschine als sicher bezeichnet werden kann.

Funktionale Sicherheit wird beispielsweise bei einem Werkzeugwechsler benötigt. Beispielsweise arbeiten in einer Fertigungszelle mehrere Roboter, die abwechselnd mit mehreren Werkzeugen (z.B. Schweißzangen) arbeiten. Wenn ein Roboter ein Werkzeug greift, wird eine sichere Verbindung zwischen dem Werkzeug und der Steuerung aufgebaut, die den Roboter kontrolliert. Selten benutzte Werkzeuge werden von den Robotern geteilt und können daher wechselweise an unterschiedlichen Robotern zum Einsatz kommen. Eine sichere Kommunikations-Verbindung zum Werkzeug darf nur zur Steuerung des Roboters aufgebaut werden, der das Werkzeug auch gerade benutzt. Eine physische Separierung kommt nicht in Frage, da die Steuerungen der Roboter untereinander kommunizieren können müssen. Die Ankopplungsstellen stellen in diesem Fall die Flansche der Roboter dar.

Auch wird funktionale Sicherheit bei Spannrahmen benötigt. Spannrahmen wandern von Station zu Station. An jeder Station gibt es einen Steckplatz. Auf dem Spannrahmen und an den Stationen gibt es Geräte, die miteinander kommunizieren. Da es auch eine Kommunikation zwischen den Stationen gibt, sollen sichere Verbindungen nur zwischen den Geräten des Spannrahmens und den Geräten der aktuellen Station aufgebaut werden.

Die DE 10 2013 003 166 A1 offenbart ein Sicherheitsmodul für einen Feldbusteilnehmer und ein Automatisierungssystem. Zur Festlegung einer sicherheitsgerichteten Identifikationsadresse ist vorgesehen, in ein Gehäuse eines Sicherheitsmodules eine Einstelleinrichtung anzuordnen. In dieser Einstelleinrichtung, beispielsweise einen DIL-Schalter, wird eine eindeutige Identifikationsadresse eingestellt.

Die US 2009/0105849 A1 offenbart ein Feldgerät zum Betrieb in einem offenen, blockorientierten, sicherheitsgerichteten Steuersystem. Dabei wird ein erweitertes SISRP-Protokoll zum Einfügen eines Authentifikators für weiterzugebende Daten eingeführt.

Die US 6,704,819 B1 offenbart ein Zugriffsverfahren auf Drucker in einem PC-Netzwerk.

Es ist Aufgabe der vorliegenden Erfindung, ein Automatisierungssystem mit einem steckplatzabhängigen Aufbau von funktionalen sicheren Feldbus-Verbindungen anzugeben, dabei aber auf eine Einstellvorrichtung, wie einen DIL-Schalter zu verzichten.

Für das eingangs genannte Automatisierungssystem wird die Aufgabe dadurch gelöst, dass die Automatisierungsgeräte dazu ausgestaltet sind, mittels eines Sicherheitsprogramms einen exklusiven Zugriff auf eines der Wechselgeräte zu erwerben und nach Erhalt einer Zugriffsberechtigung das Ankoppeln eines Wechselgerätes an eine Ankopplungsstelle zu initiieren und zu steuern, weiterhin ausgestaltet, nach dem Ankoppeln eine funktional sichere Verbindung zu dem Wechselgerät aufzubauen und Daten mit dem Wechselgerät auszutauschen und/oder und Befehle an das Wechselgerät zu senden, weiterhin ausgestaltet, die funktional sichere Verbindung zu dem derzeit angekoppelten Wechselgerät zu trennen und das Abkoppeln des Wechselgerätes von der Ankopplungsstelle zu initiieren und zu steuern, wobei das Sicherheitsprogramm weiterhin dazu ausgestaltet ist, dem exklusiven Zugriff auf das Wechselgerät wieder frei zu geben.

Dabei weist das Automatisierungssystem einen virtuellen Ring auf, welcher die Automatisierungsgeräte verbindet, wobei die Automatisierungsgeräte ausgestaltet sind, über den virtuellen Ring jeweils einen den Wechselgeräten zugeordneten Token auszutauschen, weiterhin sind die Automatisierungsgeräte dazu ausgestaltet, um einen exklusiven Zugriff auf ein Wechselgerät zu erlangen, auf dass dem Wechselgerät zugeordnete Token zu warten und es für die Dauer des exklusiven Zugriffs zu behalten und nicht benötigte Token weiter zu reichen.

Dies würde einer verteilten Lösung entsprechen: Für jedes Wechselgerät wird ein Token zyklischen zwischen den Automatisierungsgeräten in einem virtuellen Ring ausgetauscht. Um exklusiven Zugriff zu erlangen, muss das entsprechende Automatisierungsgerät auf den entsprechenden Token warten. Das Token wird erst nach Freigabe des Wechselgerätes wieder weitergereicht.

Die Lösung basiert auf der Annahme, dass die Automatisierungsgeräte einem festen Steckplatz zugeordnet sind und nicht gewechselt werden. Die Automatisierungsgeräte können beispielsweise Steuerungen von Robotern sein. Weiterhin wird angenommen, dass das An- und Abkoppeln der Wechselgeräte durch die festen Geräte kontrolliert wird. Bei dem Roboterbeispiel bedeutet das, dass die Roboter für das Greifen eines Werkzeuges verantwortlich sind bzw. deren Automatisierungsgeräte über einen Programm-Mechanismus zum An- und Abkoppeln verfügen. In dem Automatisierungsgerät bzw. in dem dazu gehörigen Sicherheitsprogramm laufen folgende Schritte ab:
1. Das Automatisierungsgerät erwirbt exklusiven Zugriff auf das Wechselgerät. Dies erfolgt funktional sicher im Sicherheitsprogramm.
2. Das Automatisierungsgerät initiiert die Ankopplung des Wechselgerätes am gewünschten Steckplatz. Dazu wird aus dem Sicherheitsprogramm eine entsprechende Anweisung an ein Standardprogramm (z.B. "Greife Werkzeug") gesendet.
3. Das Automatisierungsgerät baut eine sichere Verbindung zum Wechselgerät auf. Nach dem der Roboter seine Aufgaben erledigt hat und das Werkzeug wieder ablegen möchte, wird der Abbau einer Verbindung durchgeführt.
4. Die sichere Verbindung wird getrennt.
5. Das Automatisierungsgerät bewirkt eine Abkopplung des Wechselgerätes.
6. Der exklusive Zugriff auf das Wechselgerät wird wieder frei gegeben.

Bezüglich einer Implementierung des "exklusiven Zugriffs auf das Wechselgerät" gibt es eine Möglichkeit, welche hier zusätzlich erläutert, obwohl es nicht Teil der Erfindung ist.

Dabei sind die Automatisierungsgeräte derart ausgestaltet, dass jedem Wechselgerät ein bestimmtes Automatisierungsgerät als Master zugeordnet ist, dabei ist das einzelne Automatisierungsgerät weiterhin ausgestaltet, dass Zugriffsanfragen anderer Automatisierungsgeräte auf das diesem Automatisierungsgerät zugeordnete Wechselgerät verwaltet werden. Diese Lösung entspricht einer zentralisierten Implementierung: Jeddes Wechselgerät wird durch ein bestimmtes festes Gerät (Master) verwaltet, das den übrigen festen Geräten bekannt ist.

Die übrigen festen Geräte müssen einen Zugriff auf das Wechselgerät beim Master beantragen. Der Master garantiert, dass ein Wechselgerät jeweils nur einem festen Gerät gleichzeitig zugeordnet ist, und verwaltet die übrigen Anfragen, z.B. in einer Warteschlange. Eine solche Implementierung ist nicht Teil der Erfindung.

Im Hinblick auf einen Werkzeugwechsler in einer Fertigungszelle für mehrere zusammenarbeitende Roboter ist es von Vorteil, dass die Erfindung des Anspruchs 1 einem Handhabungs- und oder Bearbeitungssystem zugeordnet ist.

Auch wenn das oben beschriebene Automatisierungssystem und das Verfahren zur Ausführung teilweise auf Mechanismen basiert, die für sich genommen, nicht funktional-sicher implementiert sind, ist das Automatisierungssystem bzw. sein Ausführungsverfahren insgesamt funktional sicher.

### Begründung:

1. Fehlerszenario: Durch einen Fehler koppelt sich ein Automatisierungsgerät mit seinem zugehörigen Sicherheitsprogramm in Schritt 2 nicht an ein Wechselgerät an, dann kann in Schritt 3 aber auch keine Verbindung aufgebaut werden.
2. Fehlerszenario: Durch einen Fehler koppelt sich das " feste" Automatisierungsgerät in Schritt 2 an ein falsches Wechselgerät an, dann würde der Aufbau der sicheren Verbindung gemäß Schritt 3 fehlschlagen, denn alle Geräte bzw. Feldbusteilnehmer verfügen über einen sicheren "authenticity Code".
3. Fehlerszenario: Durch einen Fehler koppelt sich ein festes Automatisierungsgerät an ein Wechselgerät an, ohne dass es eine Anforderung dazu aus dem Sicherheitsprogramm gegeben hätte (Schritt 1 nicht ausgeführt). Es wird demnach keine sichere Verbindung aufgebaut, da Schritt 3 nur nach Schritt 1 ausgeführt werden kann.
4. Fehlerszenario: Ein anderes festes Automatisierungsgerät hat sich bereits fälschlicherweise an das Wechselgerät angekoppelt. In diesem Fall würde Schritt 2 fehlschlagen. Zusammenfassend kann gesagt werden, es wurde ein Automatisierungssystem und ein Verfahren aufgezeigt, bei dem ein steckplatzabhängiger Aufbau funktional sicherer Feldbus-Verbindungen durch den wechselseitigen Ausschluss in einer Software realisiert wurde.

Mit der Zeichnung wird ein Ausführungsbeispiel näher erläutert. Es zeigt die
- FIG 1: ein funktional sicherheitsgerichtetes Automatisierungssystem und
- FIG 2: das funktional sicherheitsgerichtete Automatisierungssystem in Verbindung mit einem Handhabungs- und oder Bearbeitungssystem.

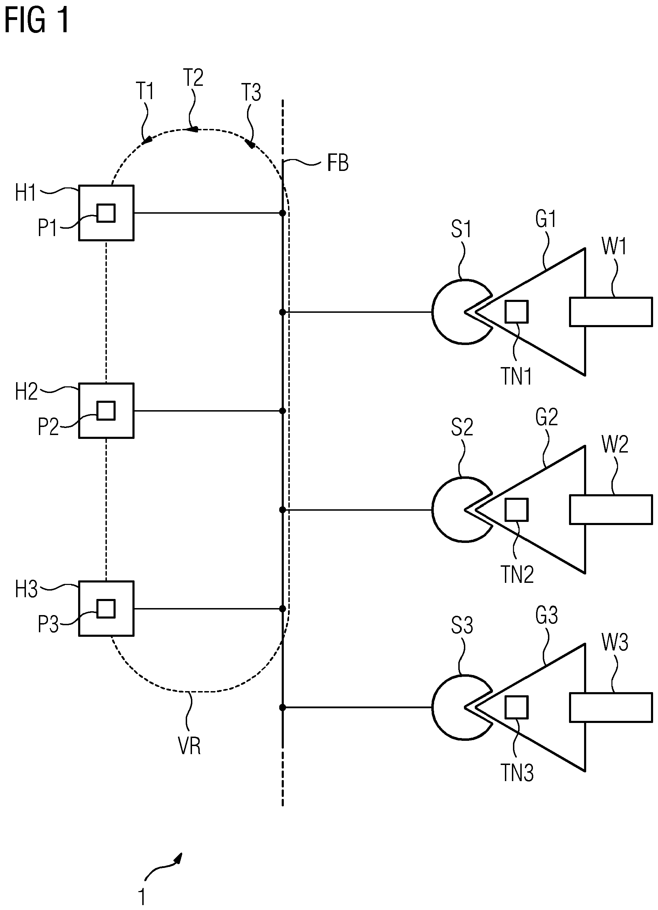

Gemäß FIG 1 ist ein auf funktionale Sicherheit ausgelegtes Automatisierungssystem 1 dargestellt. Das Automatisierungssystem 1 umfasst einen Feldbus FB, ein erstes Automatisierungsgerät H1, ein zweites Automatisierungsgerät H2 und ein drittes Automatisierungsgerät H3, welche an den Feldbus FB angeschlossen sind. Die Automatisierungsgeräte H1, H2, H3 sind fest an den Feldbus angeschlossen und haben demnach einen fest zugeordneten Steckplatz. Weiterhin können an den Feldbus FB ein erstes Wechselgerät G1, ein zweites Wechselgerät G2 und ein drittes Wechselgerät G3 angeschlossen werden. Dazu sind an dem Feldbus FB eine erste Ankopplungsstelle S1, eine zweite Ankopplungsstelle S2 und eine dritte Ankopplungsstelle S3 angeschlossen. Ein Wechselgerät G1, G2, G3 lässt sich an eine beliebige Ankopplungsstelle S1, S2, S3 ankoppeln. Nach erfolgreicher Ankopplung wird eine elektrische Verbindung zu dem Wechselgerät G1, G2, G3 hergestellt. Auch eine Kommunikationsverbindung zu den Wechselgeräten G1, G2, G3 wird nach Ankoppeln an eine Ankopplungsstelle S1, S2, S3 über einen in den Wechselgeräten G1, G2, G3 vorhandenen ersten Feldbusteilnehmer TN1 oder zweiten Feldbusteilnehmer TN2 oder dritten Feldbusteilnehmer TN3 hergestellt. Bei einem angekoppelten Wechselgerät G1, G2, G3 an eine Ankopplungsstelle S1, S2, S3 können so die Automatisierungsgeräte H1, H2, H3 über den Feldbus FB mit den Wechselgeräten G1, G2, G3 kommunizieren.

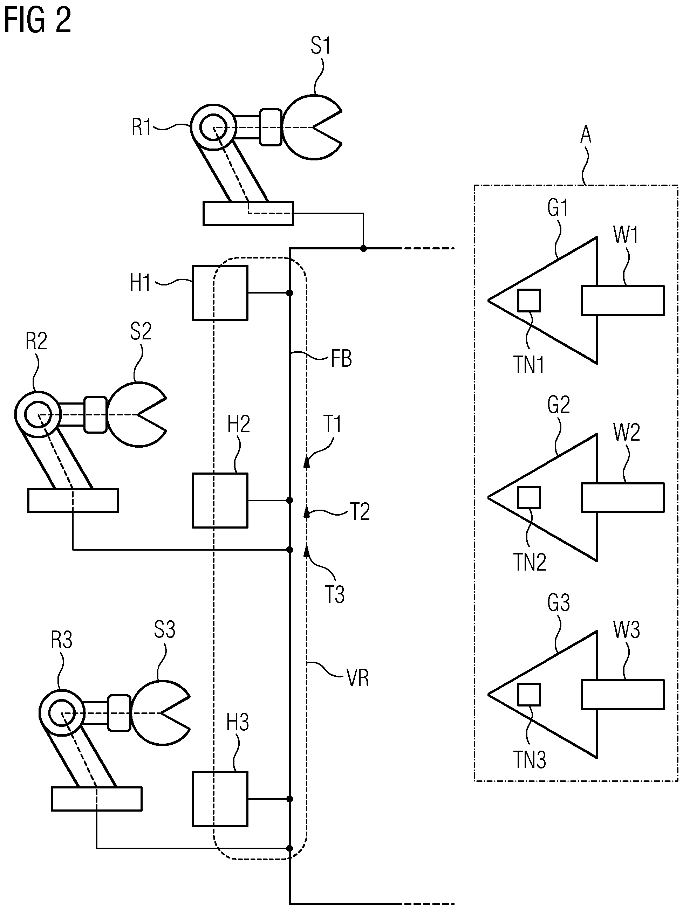

Um nun zu einem steckplatzabhängigen Aufbau von funktional sichereren Feldbus-Verbindung zu gelangen, sind die Wechselgeräte G1, G2, G3 ausgestaltet, mit dem Automatisierungsgeräten H1, H2, H3 eine funktional sichere Verbindung über den Feldbus FB aufzubauen, wobei die dadurch erreichte funktionale Sicherheit zur Vermeidung von gefährlichen Fehlfunktionen durch Fehler dient. Hierzu sind die Automatisierungsgeräte H1, H2, H3 derart ausgestaltet, dass mittels eines Sicherheitsprogrammes P1, P2, P3 ein exklusiver Zugriff auf eines der Wechselgeräte G1, G2, G3 erworben werden kann. Nach Erhalt einer Zugriffsberechtigung sind die Automatisierungsgeräte H1, H2, H3 ausgestaltet, dass Ankoppeln eines Wechselgerätes G1, G2, G3 an eine Ankopplungsstelle S1, S2, S3 zu initiieren und zu steuern. Nach dem Ankoppeln wird eine funktional sichere Verbindung zu den derzeit angekoppelten Wechselgerät G1, G2, G3 aufgebaut. Nun kann beispielsweise ein Roboter (s. FIG 2) mit dem derzeit angekoppelten Wechselgerät G1, G2, G3 seine Aufgaben erledigen. Nach Erledigung seiner Aufgabe kann er das Werkzeug W1, W2, W3 bzw. das Wechselgerät G1, G2, G3 wieder ablegen. Hierzu wird die funktional sichere Verbindung zu dem derzeit angekoppelten Wechselgerät G1, G2, G3 getrennt und das Abkoppeln des Wechselgerätes G1, G2, G3 von der Ankopplungsstelle S1, S2, S3 wird initiiert und gesteuert. Dabei ist das Sicherheitsprogramm P1, P2, P3 weiterhin dazu ausgestaltet, den exklusiven Zugriff auf das Wechselgerät G1, G2, G3 wieder frei zu geben.

Vorzugsweise wird das Automatisierungssystem 1 bzw. die Automatisierungsgeräte H1, H2, H3 einem Handhabungs- und/oder Bearbeitungssystem zugeordnet. Die Wechselgeräte G1, G2, G3 weisen dazu ein austauschbares Werkzeug W1, W2, W3 und einen Feldbusteilnehmer TN1, TN2, TN3 auf.

Bezüglich der softwaremäßigen Implementierung des "exklusiven Zugriffs auf das Wechselgerät" gibt es für die Automatisierungsgeräte H1, H2, H3 eine Möglichkeit mit einem zyklisch kreisenden Token. Hierzu ist dem ersten Wechselgerät G1 ein erster Token T1, dem zweiten Wechselgerät G2 ein zweiter Token T2, dem dritten Wechselgerät G3 ein dritter Token T3 zugeordnet. Die Token T1, T2, T3 kreisen zyklisch zwischen den Automatisierungsgeräten H1, H2, H3 in einem virtuellen Ring VR. Die Automatisierungsgeräte H1, H2, H3 sind kommunikationstechnisch dazu ausgestaltet, die den Wechselgeräten G1, G2, G3 zugeordneten Token T1, T2, T3 untereinander auszutauschen. Will ein Automatisierungsgerät H1, H2, H3 einen exklusiven Zugriff auf ein Wechselgerät G1, G2, G3 erlangen, so wartet es auf das entsprechende Token T1, T2, T3 und behält es für die Dauer des gewünschten exklusiven Zugriffes auf das entsprechende Wechselgerät G1, G2, G3. Derzeit nicht benötigte Token T1, T2, T3 werden in dem virtuellen Ring VR zyklisch weitergeleitet.

In einer anderen Variante, die nicht Teil der Erfindung ist, sind die Automatisierungsgeräte H1, H2, H3 derart ausgestaltet, dass jedem Wechselgerät G1, G2, G3 ein bestimmtes Automatisierungsgerät H1, H2, H3 als Master zugeordnet ist, dabei ist das einzelne Automatisierungsgerät H1, H2, H3 weiterhin dazu ausgestaltet, die Zugriffsanfragen anderer Automatisierungsgeräte H1, H2, H3 auf das diesem Automatisierungsgerät H1, H2, H3 zugeordnete Wechselgerät G1, G2, G3 zu verwalten.

Das in FIG 1 gezeigte Automatisierungssystem 1 wird mit Vorteil gemäß FIG 2 in einen Handhabungs- und/oder Bearbeitungssystem eingesetzt. Als Beispiel für ein Handhabungs- und/oder Bearbeitungssystem seien hier ein erstes Bearbeitungssystem R1, ein zweites Bearbeitungssystem R2 und ein drittes Bearbeitungssystem R3 jeweils in Gestalt eines Roboters eingesetzt. Damit das erste Bearbeitungssystem R1 gesteuert werden kann, ist es fest an das zugehörige erste Automatisierungsgerät H1 angeschlossen. Das zweite Bearbeitungssystem R2 ist fest an das zweite Automatisierungsgerät H2 angeschlossen und das dritte Bearbeitungssystem R3 ist fest an das dritte Automatisierungsgerät H3 angeschlossen.

Die Bearbeitungssysteme R1, R2, R3 können sich von einem Ablageplatz A, die bereits aus FIG 1 bekannten Wechselgeräte G1, G2, G3 abholen. Die Bearbeitungssysteme R1, R2, R3 weisen hierzu, beispielsweise in ihrem Roboterkopf, die erste Ankopplungsstelle S1, die zweite Ankopplungsstelle S2 bzw. die dritte Ankopplungsstelle S3 auf. In die Ankopplungsstellen S1, S2, S3 ist eine Feldbusleitung geführt, welche ebenfalls an den Feldbus FB angeschlossen ist. In dem Bearbeitungssystemen R1, R2, R3 ist die Feldbusleitung gestrichelt bis zur Ankopplungsstelle S1, S2, S3 eingezeichnet. Initiiert nun beispielsweise das erste Automatisierungsgerät H1 das Ankoppeln des ersten Wechselgerätes G1 so wird das erste Bearbeitungssystem R1 in dem Ablageplatz A greifen und sich das erste Wechselgerät G1 mit seinem ersten Werkzeug W1 greifen. Durch das Greifen wird ein erfolgreiches Ankoppeln des Wechselgeräte G1, an die erste Ankopplungsstelle S1 durchgeführt und der erste Feldbusteilnehmer TA1 kann über die Ankopplungsstelle S1 mit dem Feldbus FB verbunden werden und das erste Automatisierungsgerät H1 baut zu dem ersten Feldbusteilnehmer TN1 eine funktional sichere Verbindung auf.

Analog zu dem vorher gesagten können beliebige funktional sichere Verbindungen von Automatisierungsgeräten H1, H2, H3 zu den entsprechenden Feldbusteilnehmern T1, T2, T3 nach der aufgezeigten funktional sicheren Vorschrift aufgebaut werden.

## Patentansprüche

1. Automatisierungssystem (1) umfassend
- einen Feldbus (FB),
- zumindest zwei Wechselgeräte (G1, G2, G3) mit einem austauschbaren Werkzeug (W1, W2, W3),
- zumindest zwei Automatisierungsgeräte (H1, H2, H3), welche an den Feldbus (FB) fest angeschlossen sind,
- zumindest zwei Ankopplungsstellen (S1, S2, S3), welche an den Feldbus (FB) angeschlossen sind, und für ein automatisiertes An- und Abkoppeln eines Wechselgerätes (G1, G2, G3) an den Feldbus (FB) ausgestaltet sind, wobei
jedes Wechselgerät (G1, G2, G3) einen Feldbusteilnehmer (TN1, TN2, TN3) umfasst, der für eine Ansteuerung von Aktoren auf dem Werkzeug (W1, W2, W3) ausgebildet ist,
die Wechselgeräte (G1, G2, G3) ein austauschbares Werkzeug und einen Feldbusteilnehmer umfassen und weiterhin ausgestaltet sind mit den Automatisierungsgeräten (H1, H2, H3) eine funktional sichere Verbindung über den Feldbus (FB) aufzubauen, wobei die dadurch erreichte funktionale Sicherheit zur Vermeidung von Fehlfunktionen durch Fehler dient,
**gekennzeichnet, durch**
einen virtuellen Ring (VR), welcher die Automatisierungsgeräte (H1, H2, H3) verbindet, wobei die Automatisierungsgeräte (H1, H2, H3) ausgestaltet sind, über den virtuellen Ring (VR) jeweils einen den Wechselgeräten (G1, G2, G3) zugeordneten Token (T1, T2, T3) auszutauschen, weiterhin sind die Automatisierungsgeräte (H1, H2, H3) dazu ausgestaltet, um einen exklusiven Zugriff auf ein Wechselgerät zu erlangen, auf das dem Wechselgerät (G1, G2, G3) zugeordnete Token (T1, T2, T3) zu warten und es für die Dauer des exklusiven Zugriffs zu behalten und nicht benötigte Token (T1, T2, T3) weiter zu reichen,
die Automatisierungsgeräte (H1, H2, H3) sind dabei dazu ausgestaltet, mittels eines Sicherheitsprogramms (P1, P2, P3) den exklusiven Zugriff auf eines der Wechselgeräte (G1, G2, G3) zu erwerben und nach Erhalt des dem Wechselgerät (G1, G2, G3) zugeordneten Tokens (T1, T2, T3) ein Ankoppeln des entsprechenden Wechselgerätes (G1, G2, G3) an die entsprechende Ankopplungsstelle (S1, S2, S3) zu initiieren und zu steuern, weiterhin ausgestaltet nach dem Ankoppeln eine funktional sichere Verbindung zu dem Wechselgerät (G1, G2, G3) aufzubauen, und Befehle an das Wechselgerät (G1, G2, G3) zu senden, weiterhin ausgestaltet die funktional sichere Verbindung zu dem derzeit angekoppelten Wechselgerät (G1, G2, G3) zu trennen und das Abkoppeln des Wechselgerätes (G1, G2, G3) von der Ankopplungsstelle (S1, S2, S3) zu initiieren und zu steuern, wobei das Sicherheitsprogramm (P1, P2, P3) weiterhin dazu ausgestaltet ist, den exklusiven Zugriff auf das Wechselgerät (G1, G2, G3) wieder freizugeben.

2. Automatisierungssystem nach Anspruch 1,
**dadurch gekennzeichnet, dass** die Automatisierungsgeräte (H1, H2, H3) und die Wechselgeräte (G1, G2, G3) einem Handhabungs- und/oder Bearbeitungssystem (R1, R2, R3) zugeordnet sind.

## Claims

1. Automation system (1) comprising
- a fieldbus (FB),
- at least two exchanging devices (G1, G2, G3) with an exchangeable tool (W1, W2, W3),
- at least two automation devices (H1, H2, H3) which are securely connected to the fieldbus (FB),
- at least two coupling points (S1, S2, S3) which are connected to the field bus (FB) and designed for an automated connection and disconnection of an exchanging device (G1, G2, G3) to and from the fieldbus (FB), wherein
each exchanging device (G1, G2, G3) comprises a fieldbus subscriber (TN1, TN2, TN3) which is embodied to control actuators on the tool (W1, W2, W3),
the exchanging devices (G1, G2, G3) comprise an exchangeable tool and a fieldbus subscriber and are further designed to establish a functionally safe connection with the automation devices (H1, H2, H3) by way of the fieldbus (FB), wherein the functional safety thus achieved serves to avoid malfunctions as a result of errors,
**characterised by**
a virtual ring (VR) which connects the automation devices (H1, H2, H3), wherein the automation devices (H1, H2, H3) are designed to exchange a token (T1, T2, T3) assigned to each of the exchanging devices (G1, G2, G3) by way of the virtual ring (VR), furthermore, the automation devices (H1, H2, H3) are designed to gain exclusive access to an exchanging device, to wait for the token (T1, T2, T3) assigned to the exchanging device (G1, G2, G3) and to retain it for the duration of the exclusive access and to forward the tokens (T1, T2, T3) which are not required,
the automation devices (H1, H2, H3) are designed to gain exclusive access to one of the exchanging devices (G1, G2, G3) by means of a safety program (P1, P2, P3) and to initiate and control a connection of the corresponding exchanging device (G1, G2, G3) to the corresponding coupling point (S1, S2, S3) after obtaining the token (T1, T2, T3) assigned to the exchanging device (G1, G2, G3), are further designed to establish a functionally safe connection to the exchanging device (G1, G2, G3) after connection, and to send commands to the exchanging device (G1, G2, G3), are further designed to disconnect the functionally safe connection to the currently connected exchanging device (G1, G2, G3) and to initiate and control the disconnection of the exchanging device (G1, G2, G3) from the coupling point (S1, S2, S3), wherein the safety program (P1, P2, P3) is further designed to enable exclusive access to the exchanging device (G1, G2, G3) again.

2. Automation system (1) according to claim 1,
**characterised in that** the automation devices (H1, H2, H3) and the exchanging devices (G1, G2, G3) are assigned to a handling and/or processing system (R1, R2, R3).

## Revendications

1. Système (1) d'automatisation comprenant
- un bus (FB) sur site,
- au moins deux appareils (G1, G2, G3) échangeables ayant un outil (W1, W2, W3), qui peut être remplacé,
- au moins deux appareils (H1, H2, H3) d'automatisation, qui sont raccordés fixement au bus (FB) sur site,
- au moins deux points (S1, S2, S3) de raccordement, qui sont raccordés au bus (FB) sur site, et qui sont conformés pour un raccordement automatisé d'un appareil (G1, G2, G3) échangeable au bus (FB) sur site et un déraccordement automatisé du bus (FB), dans lequel
chaque appareil (G1, G2, G3) échangeable comprend un participant (TN1, TN2, TN3) au bus sur site qui est constitué pour la commande d'actionneurs sur l'outil (W1, W2, W3),
les appareils (G1, G2, G3) échangeables comprennent un outil pouvant être remplacé et un participant au bus sur site et sont conformés en outre pour construire avec les appareils (H1, H2, H3) d'automatisation une liaison sécurisée fonctionnellement par l'intermédiaire du bus (FB) sur site, dans lequel la sécurité fonctionnelle ainsi obtenue sert à empêcher des fonctionnements défectueux par des défauts,
**caractérisé par**
un anneau (VR) virtuel qui relie les appareils (H1, H2, H3) d'automatisation, dans lequel les appareils (H1, H2, H3) d'automatisation sont conformés pour échanger par l'intermédiaire de l'anneau (VR) virtuel respectivement un jeton (T1, T2, T3) associé aux appareils (G1, G2, G3) échangeables, les appareils (H1, H2, H3) d'automatisation étant en outre conformés pour obtenir un accès exclusif à un appareil échangeable, pour garder des jetons (T1, T2, T3) associés à l'appareil (G1, G2, G3) échangeable et pour le conserver pendant la durée de l'accès exclusif et ne pas continuer à profiter de jetons (T1, T2, T3) qui ne sont pas nécessaires,
les appareils (H1, H2, H3) d'automatisation sont ainsi conformés pour acquérir au moyen d'un programme (P1, P2, P3) sécurisé l'accès exclusif à l'un des appareils (G1, G2, G3) échangeable et pour, après obtention du jeton (T1, T2, T3) associé à l'appareil (G1, G2, G3) échangeable, lancer et commander un raccordement de l'appareil (G1, G2, G3) échangeable correspondant aux points (S1, S2, S3) d'accouplement correspondants, étant conformé en outre pour, après l'accouplement construire une liaison sécurisée fonctionnellement avec l'appareil (G1, G2, G3) échangeable et envoyer des instructions à l'appareil (G1, G2, G3) échangeable, étant conformé en outre pour couper la liaison sécurisée fonctionnellement à l'appareil (G1, G2, G3) échangeable raccordé à cet instant et pour lancer et commander le déraccordement de l'appareil (G1, G2, G3) échangeable du point (S1, S2, S3) de raccordement, dans lequel le programme (P1, P2, P3) sécurisé est conformé en outre pour revalider l'accès exclusif à l'appareil (G1, G2, G3) échangeable.

2. Système d'automatisation suivant la revendication 1, **caractérisé en ce que** les appareils (H1, H2, H3) d'automatisation et les appareils (G1, G2, G3) échangeables sont associés à un système (R1, R2, R3) de manipulation et/ou de traitement.
